# EUROPEAN PATENT APPLICATION

(11) **EP 1 666 806 A2**
(43) Date of publication of application: **07.06.2006**
(21) Application number: 05016682.6
(22) Date of filing: 01.08.2005
(51) Int. Cl.: F24F 11/00

(54) **Multi-air condition system and method for controlling the same**

(30) Priority: 06.12.2004 KR 2004101722
(71) Applicant: LG Electronics, Inc., Seoul (KR)
(72) Inventor: Park, Young Min, Kangseo-gu Seoul (KR); Sung, Si Kyong, Guro-gu, Seoul (KR); Yoon, Seok Ho, Guseong-eup, Yongin-si, Gyeonggi-do (KR); Choi, Sung Oh, Gwangmyeong-si, Gyeonggi-do (KR); Jeong, Ho Jong, Geumcheon-gu, Seoul (KR)
(74) Representative: TER MEER - STEINMEISTER & PARTNER GbR

(57) **Abstract**

Multi-air condition system including a plurality of outdoor units (10, 20, 30), a pressure equalizing pipe (40) connected such that refrigerant can flow among the outdoor units (10, 20, 30), for eliminating refrigerant pressure differences, and imbalance of an amount of refrigerant flow among the outdoor units (10, 20, 30), and control valves (51, 61) at portions of the pressure equalizing pipe (40) connected to the outdoor units (10, 20, 30) respectively, for cutting off introduction of the refrigerant to a relevant outdoor unit under the control of a controller.

## Description

### CROSS-REFERENCE TO RELATED APPLICATION

This application claims the benefit of Korean Application No. P2004-101722, filed on December 6, 2004, which is hereby incorporated by reference as if fully set forth herein.

### BACKGROUND OF THE INVENTION

### Field of the Invention

The present invention relates to multi-air condition systems, and more particularly, to a multi-air condition system for improving cooling/heating performance; and a method for controlling the same.

### Discussion of the Related Art

In general, the air condition system cools/heats a room by performing the steps of compression, condensing, expanding, and evaporating refrigerant. In the air condition systems, there are cooling systems in which a refrigerant cycle is operated only in one direction to supply cold air to the room, and cooling/heating systems in which the refrigerant system is operated in bilateral directions selectively, for supplying cold air, or warm air to the room.

Moreover, there are conventional air condition systems in which one indoor unit is connected to one outdoor unit, and multi-air condition systems in which a plurality of indoor units are connected to one outdoor unit. In the meantime, the multi-air condition system may have at least one outdoor unit.

The multi-air condition system having a plurality of outdoor units has at least one compressor mounted on every outdoor unit. The compressor may be a single speed compressor having a constant operation frequency, or a variable speed compressor having variable operation frequency.

It is required that the multi-air condition system can deal with variation of load depending on time, and space coming from presence of people in the room where the indoor unit is mounted. Accordingly, a cooling/heating load increases if a number of operating indoor units increases, and it is required to adjust a capacity of the outdoor unit in correspondence thereto for securing an adequate capacity in a case of operation of all rooms, while enabling an effective operation even in a case of partial load in which only one room is operated.

However, the multi-air condition system having the plurality of outdoor units has the following problem.

That is, in a case the plurality of outdoor units are in operation, there has been a problem in that there have been partial refrigerant pressure differences among refrigerant pipes, to cause pressure losses, resulting to impair the cooling/heating performance.

### SUMMARY OF THE INVENTION

Accordingly, the present invention is directed to a multi-air condition system, and a method for controlling the same that substantially obviates one or more problems due to limitations and disadvantages of the related art.

An object of the present invention is to provide a multi-air condition system, and a method for controlling the same, which can eliminate refrigerant pressure differences among a plurality of outdoor units.

Another object of the present invention is to provide a multi-air condition system, and a method for controlling the same, which can improve a cooling/heating performance.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a multi-air condition system including a plurality of outdoor units, a pressure equalizing pipe connected such that refrigerant can flow among the outdoor units, for eliminating refrigerant pressure differences, and imbalance of an amount of refrigerant flow among the outdoor units, and control valves at portions of the pressure equalizing pipe connected to the outdoor units respectively, for cutting off introduction of the refrigerant to a relevant outdoor unit under the control of a controller.

The control valve is a solenoid valve, and preferably, a 2-way solenoid valve. The control valve may be of a normally open type.

The outdoor unit includes a 4-way valve, and a compression unit, an outdoor heat exchanger, and an accumulator connected to the 4-way valve, and the pressure equalizing pipe is connected to the refrigerant pipe between the 4-way valve and the outdoor heat exchanger in each of the outdoor units.

The 4-way valve is connected to an outlet side refrigerant pipe of the compression unit, an inlet side of the outdoor heat exchanger, an inlet side refrigerant pipe of the accumulator, and an indoor unit side refrigerant pipe.

The plurality of outdoor units include a main unit having a variable speed compressor with a variable operation frequency, and at least one subunit having at least one single speed compressor with a constant operation frequency. The control valve is mounted only on a portion having the pressure equalizing pipe connected to the subunit. The multi-air condition system may further include a manual valve of a normally open type to be opened/closed manually mounted on a portion of the pressure equalizing pipe connected to the main unit.

In another aspect of the present invention, a multi-air condition system includes a plurality of outdoor units having a main unit in operation when the multi-air condition system is in operation always, and subunits excluding the main unit, each outdoor unit including a compression unit having at least one compressor, an accumulator, an outdoor heat exchanger, and a 4-way valve connected to an outlet side refrigerant pipe of the compression unit, an inlet side refrigerant pipe of the outdoor heat exchanger, a pressure equalizing pipe connected among inlet side refrigerant pipes of the outdoor heat exchangers of the outdoor units, for eliminating pressure differences, and imbalance of refrigerant flow amounts among outdoor units in operation, a manual valve of a normally open type mounted at a portion having the pressure equalizing pipe connected to the main unit, for opening/closing manually, and a solenoid valve of a normally open type each mounted at a portion having the pressure equalizing pipe connected to each of the subunits, for automatic cut off of a refrigerant flow toward an outdoor unit which is not in operation under the control of a controller.

The main unit includes at least one variable speed compressor of which operation frequency varies.

In another aspect of the present invention, a method for controlling a multi-air condition system includes the steps of putting an air conditioner into operation, checking operation of outdoor units, and closing control valves connected to outdoor units which are not in operation for cutting off introduction of refrigerant into the outdoor unit which are not in operation.

Operation of the outdoor unit can be determined by checking operation of a compressor. The method further includes the steps of checking open/close of the control valves after checking operation of the outdoor units, and opening the control valve connected to the outdoor unit in operation if the control valve is in a closed state.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a diagram showing cooling operation of a multi-air condition system in accordance with a preferred embodiment of the present invention; and

FIG. 2 illustrates a diagram showing cooling operation of a multi-air condition system in FIG. 1.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

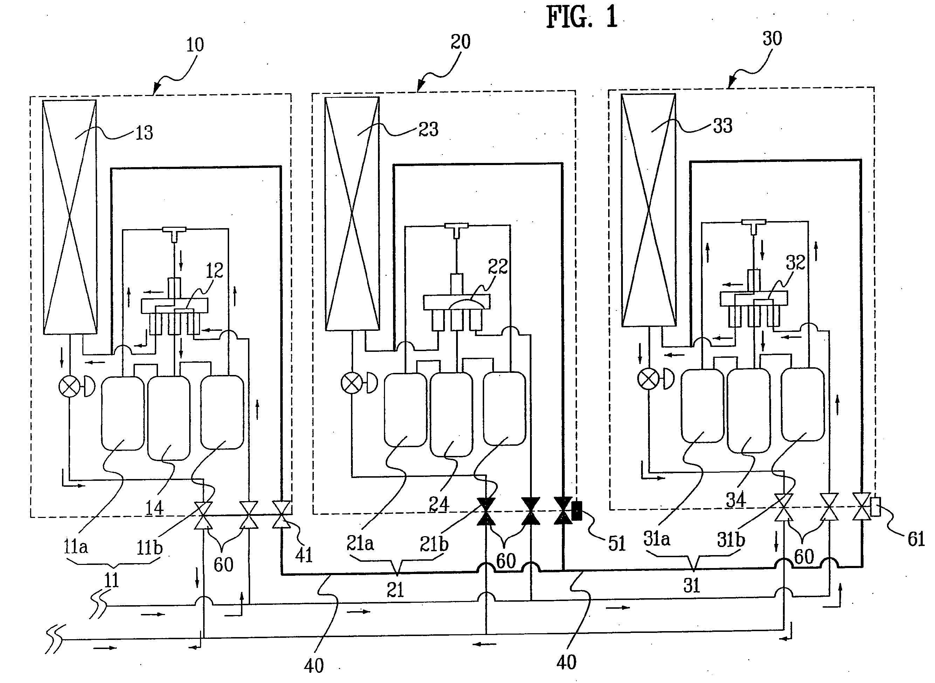

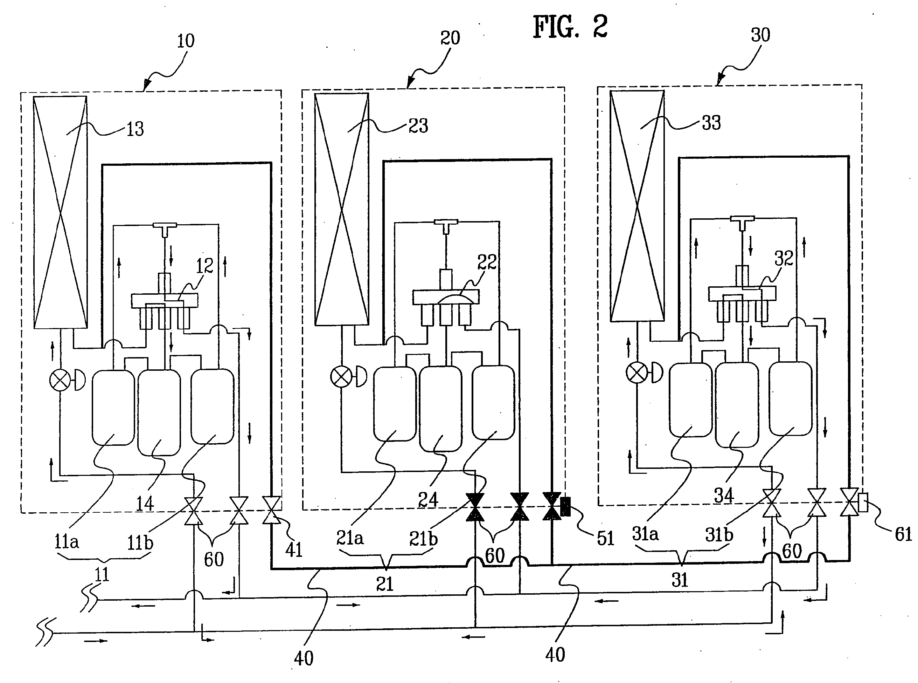

FIGS. 1 and 2 illustrate cooling/heating operations of a multi-air condition system in accordance with a preferred embodiment of the present invention, respectively.

Referring to FIGS. 1 and 2, the multi-air condition system includes a plurality of outdoor units 10, 20, and 30, pressure equalizing pipes 40 connected among refrigerant flow passages of the outdoor units for eliminating pressure differences among the outdoor units, and control valves 51, and 61 mounted on portions the pressure equalizing pipes 40 are connected to the outdoor units respectively, so as to be opened/closed by a controller.

The plurality of outdoor units may be sorted as a main unit 10, and subunits 20, and 30.

The main unit 10 includes a variable speed compressor 11a to be described later, and the subunits 20, and 30 include compression unit 21, and 31 respectively, each having a plurality of single speed compressors.

The main unit 10 includes a compression unit 11 having at least one compressor, a 4-way valve 12 connected to a discharge side of the compression unit 11, an outdoor heat exchanger 13 connected to a refrigerant pipe connected to the 4-way valve 11, and an accumulator 14 connected to a refrigerant pipe on a suction side of the compression unit 11.

The compression unit 11 includes variable speed compressor 11 a having an inverter circuit applied thereto to vary an operation frequency, and a single speed compressor 11b having a constant speed, used generally.

Of course, it is apparent that the compression unit 11 may include the variable speed compressors 11a only. If the compression unit 11 only include the variable speed compressors 11 a, fine control of refrigerant amount, and temperature is possible.

A number of the compressors of the compression unit 11 may vary. Moreover, though, only one outdoor heat exchanger is illustrated in FIG. 1, it is apparent that the number of the outdoor heat exchanger is not limited thereto, but two or more than two outdoor heat exchangers are provided.

There is a manual valve 60, which is opened/closed manually, mounted in the refrigerant pipe connected to the 4-way valve 12. The manual valve is on/off valve.

Alike the main unit 10, the subunit 20, or 30 also includes the compression unit 21, or 31, 4-way valve 22, or 32, an outdoor heat exchanger 23, or 33, and an accumulator 24, and 34.

However, the subunit 20, or 30 includes single speed compressors 21a, and 21b, or 31a, and 31b only. Therefore, the main unit 10 can control a refrigerant amount finer than the subunit 20 or 30.

The subunit 20 or 30 may have a system different from the main unit 10. For an example, it is apparent that a number of the single speed compressors of the compression unit 21, and 31 may be changed, or a number of the outdoor heat exchangers 23, and 33 may be changed.

Also, the main unit 10, and the two subunits 20, and 30 are connected with pressure equalizing pipes 40. For an example, of the main unit 10 and the subunits 20, and 30, one end of a branch of the pressure equalizing pipe 40 is connected to a section through which refrigerant flows from the 4-way valves to the outdoor heat exchangers of units.

The pressure equalizing pipe 40 has a function of preventing pressure and refrigerant amount imbalance among the units 10, 20, and 30 from occurring depending on operation conditions by making refrigerant to be able to communicate among the units 10, 20, and 30. The pressure equalizing pipe 40 has a high pressure during cooling operation, and a low pressure during heating operation.

There are control valves 51, and 61 mounted in branch lines from the pressure equalizing pipe 40 to the subunits 20, and 30, respectively. The control valve 51 cuts of a refrigerant pipe which leads refrigerant to a relevant outdoor unit if there is a non-operative subunit. It is preferable that the control valves 51, and 61 are 2-way solenoid valve opened/closed automatically by the controller.

In the meantime, if the refrigerant pipe is long, an amount of the refrigerant required to be filled in the system becomes great, and, if the outdoor unit stops, a pressure is built up during high/low pressures balance, resulting in a heavy load put on the compressor when the compressor starts. The control valves 51, and 61 eliminate such a problem.

The 2-way solenoid valve has a pipe connector at each of one inlet and one outlet. It is preferable that the solenoid valve is of a Normally Open type (NO), which is kept opened when no power is applied thereto, and closed when power is applied thereto. Moreover, it is preferable that the solenoid valve is a double-acting solenoid valve having a self-holding function in which the valve maintains a state when a signal is applied thereto even if the signal is applied thereto no more.

It is preferable that the control valves 51, and 61 are mounted in portions of pipe lines of the pressure equalizing pipe 40 connected to the subunits 20, and 30.

Moreover, it is preferable that a manual valve 41, which is opened/closed manually, is mounted in a connection portion of the pressure equalizing pipe 40 to the main unit 10. Of course, it is apparent that, instead of the manual valve 41, a solenoid valve may be used for enabling automatic close/open.

The manual valve 41 is always left open during the multi-air condition system is in operation, and the main unit 10 is always in operation. In this instance, the control valves 51, and 61 prevent refrigerant from flowing to an outdoor unit of a non-operative subunit, if any. According to this, overloading of cooling/heating load of the multi-air condition system is prevented.

Cooling operation of the multi-air condition system will be described with reference to FIG. 1.

Upon putting the system into operation, the controller determines a number of indoor units required to be operated, and an amount of refrigerant required, a predetermined number of subunits and the main unit are put into operation. A case when if one of the two subunits are not in operation will be described.

The manual valve 41 in the pressure equalizing pipe 40 at the main unit 10 is opened in room cooling. The refrigerant compressed at the single speed compressor and the variable speed compressor 11a of the main unit 10 is introduced into the outdoor heat exchanger 13 under the control of the 4-way valve 12. Then, the refrigerant in the outdoor heat exchanger 13 is condensed, as the refrigerant heat exchanges with outdoor air. The refrigerant condensed thus is provided to the outdoor unit. At the same time with this, the refrigerant compressed at the compression unit 31 of one of the subunits 30 is introduced to the outdoor heat exchangers 13, and 33, under the control of the 4-way valves 12, and 32. Then, the refrigerant is condensed at the outdoor heat exchangers 13, and 33 and introduced into the indoor units (not shown).

Then, the refrigerant in the indoor units heat exchanges with room air, and then, introduced into the main unit 10 and one of the subunit 30 in operation. In this instance, only gaseous refrigerant is introduced into a relevant compressors through the accumulators 13, and 34, respectively.

In this instance, there is a pressure difference between refrigerant pipes of the main unit 10 and the subunit 30. The pressure difference causes refrigerant flow from a high pressure side to a low pressure side through the pressure equalizing pipe 40. The refrigerant flow eliminates the pressure difference between the main unit 10 and the subunit 30 in operation. In this instance, since the control valve 51 at the subunit 20 which is not in operation cuts off a flow passage of the pressure equalizing pipe 40, the refrigerant flow to the subunit 20 which is not in operation is prevented.

Moreover, the valves 60 in the inlet/outlet refrigerant pipes of the subunit 20 which is not in operation are closed, too.

Next, upon starting heating operation, the controller determines a number of indoor unit required to operate, and an amount of refrigerant required, and puts a required number of subunits and the main unit into operation. A case when one of the two subunits is not in operation will be described.

The refrigerant compressed at the variable speed compressor 11a, and the single speed compressor 11b of the main unit 10 is introduced into the indoor units under the control of the 4-way valves 12, respectively. In this instance, the refrigerant is condensed as the refrigerant heat exchanges with room air at the indoor units, respectively. At the same time with this, the refrigerant compressed at the compression unit 31 of the subunit 30 is introduced into the indoor unit under the control of the 4-way valve 32.

The refrigerant heat exchanges with the room air at the indoor unit, and introduced into the main unit 10 and one of the subunits 30. In this instance, after heat exchanged at the outdoor heat exchanger 13, the refrigerant flows into the accumulator 14. Then, the accumulator 14 makes only the gaseous refrigerant introduced into a relevant compressor.

In this instance too, there is a pressure difference between the main unit 10 and the subunit 30 under operation. The pressure difference causes refrigerant flow from a high pressure side to a low pressure side through the pressure equalizing pipe 40. The refrigerant flow eliminates the pressure difference between the main unit 10 and the subunit30 under operation. Because the control valve 51 at the subunit 20 which is not in operation cuts off a flow passage of the pressure equalizing pipe 40, the refrigerant flow toward the subunit 20 which is not in operation is cut off.

Moreover, the valves in the inlet/outlet pipes of the subunit 20 which is not in operation are also closed.

Thus, the pressure equalizing pipe 40 eliminates the pressure difference between the main unit 10 and the subunit 20 which is not in operation.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A multi-air condition system comprising:
a plurality of outdoor units;
a pressure equalizing pipe connected such that refrigerant can flow among the outdoor units, for eliminating refrigerant pressure differences, and imbalance of an amount of refrigerant flow among the outdoor units; and
control valves at portions of the pressure equalizing pipe connected to the outdoor units respectively, for cutting off introduction of the refrigerant to a relevant outdoor unit under the control of a controller.

2. The multi-air condition system as claimed in claim 1, wherein the control valve is a solenoid valve.

3. The multi-air condition system as claimed in claim 1 or 2, wherein the control valve is a 2-way solenoid valve.

4. The multi-air condition system as claimed in claim 1 or 2, wherein the control valve is of a normally open type.

5. The multi-air condition system as claimed in claim 1, wherein the outdoor unit includes a 4-way valve, and a compression unit, an outdoor heat exchanger, and an accumulator connected to the 4-way valve, and the pressure equalizing pipe is connected to the refrigerant pipe between the 4-way valve and the outdoor heat exchanger in each of the outdoor units.

6. The multi-air condition system as claimed in claim 5, wherein the 4-way valve is connected to an outlet side refrigerant pipe of the compression unit, an inlet side of the outdoor heat exchanger, an inlet side refrigerant pipe of the accumulator, and an indoor unit side refrigerant pipe.

7. The multi-air condition system as claimed in claim 1, wherein the plurality of outdoor units include;
a main unit having a variable speed compressor with a variable operation frequency, and
at least one subunit having at least one single speed compressor with a constant operation frequency.

8. The multi-air condition system as claimed in claim 1, wherein the control valve is mounted only on a portion having the pressure equalizing pipe connected to the subunit.

9. The multi-air condition system as claimed in claim 7, further comprising a manual valve to be opened/closed manually mounted on a portion of the pressure equalizing pipe connected to the main unit.

10. The multi-air condition system as claimed in claim 9, wherein the manual valve is of a normally open type.

11. A multi-air condition system comprising:
a plurality of outdoor units having a main unit in operation when the multi-air condition system is in operation always, and subunits excluding the main unit, each outdoor unit including a compression unit having at least one compressor, an accumulator, an outdoor heat exchanger, and a 4-way valve connected to an outlet side refrigerant pipe of the compression unit, an inlet side refrigerant pipe of the outdoor heat exchanger;
a pressure equalizing pipe connected among inlet side refrigerant pipes of the outdoor heat exchangers of the outdoor units, for eliminating pressure differences, and imbalance of refrigerant flow amounts among outdoor units in operation;
a manual valve of a normally open type mounted at a portion having the pressure equalizing pipe connected to the main unit, for opening/closing manually; and
a solenoid valve of a normally open type each mounted at a portion having the pressure equalizing pipe connected to each of the subunits, for automatic cut off of a refrigerant flow toward an outdoor unit which is not in operation under the control of a controller.

12. The multi-air condition system as claimed in claim 11, wherein the main unit includes at least one variable speed compressor of which operation frequency varies.

13. A method for controlling a multi-air condition system, comprising the steps of:
putting an air conditioner into operation;
checking operation of outdoor units; and
closing control valves connected to outdoor units which are not in operation for cutting off introduction of refrigerant into the outdoor unit which are not in operation.

14. The method as claim in claim 13, wherein operation of the outdoor unit is determined by checking operation of a compressor.

15. The method as claim in claim 13, further comprising the steps of:
checking open/close of the control valves after checking operation of the outdoor units; and
opening the control valve connected to the outdoor unit in operation if the control valve is in a closed state.
